# FASCICULE DE BREVET EUROPEEN

(11) **EP 3 083 739 B1**
(45) Date de publication et mention de la délivrance du brevet: **12.09.2018**
(21) Numéro de dépôt: 14827511.8
(22) Date de dépôt: 15.12.2014
(51) Int. Cl.: C08G 18/48, C08G 18/75, C09D 7/00, C08G 18/28

(54) **AGENT ÉPAISSISSANT HYDROSOLUBLE POUR SYSTÈMES AQUEUX, FORMULATIONS LE CONTENANT ET UTILISATIONS**
WASSERLÖSLICHES VERDICKUNGSMITTEL FÜR WÄSSRIGE SYSTEME, FORMULIERUNGEN DAMIT UND VERWENDUNGEN DAVON
WATER-SOLUBLE THICKENING AGENT FOR AQUEOUS SYSTEMS, FORMULATIONS CONTAINING SAME AND USES THEREOF

(30) Priorité: 16.12.2013 FR 1362672
(43) Date de publication de la demande: 26.10.2016
(73) Titulaire: COATEX, 69730 Genay (FR)
(72) Inventeur: RUHLMANN, Denis, F-69730 Genay (FR); SUAU, Jean-Marc, F-69480 Lucenay (FR); MATTER, Yves, F-69650 Quincieux (FR)
(74) Mandataire: Balmefrezol, Ludovic Francis Pierre
(86) Numéro de dépôt international: PCT/FR2014/053343
(87) Numéro de publication internationale: WO 2015/092248

(56) Documents cités:
- EP-A1- 2 361 939
- WO-A1-02/102868
- WO-A1-2006/048539

## Description

La présente invention se rapporte à de nouveaux épaississants associatifs appartenant à la catégorie des HEUR (Hydrophobically modified Ethyoxylated URethane). Ces produits contiennent un composé associatif de type pentastyrylcumylphénol polyalkoxylé. La présente invention concerne également des compositions aqueuses intermédiaires contenant de tels épaississants, ainsi que les formulations finales, par exemple les formulations de peinture.

Les peintures sont constituées de charges et de pigments et d'au moins un polymère organique appelé liant. Outre les charges, les pigments et le liant, une formulation de peinture comporte également un solvant (qui est l'eau dans le cas des peintures en phase aqueuse), des additifs pour la rhéologie, des additifs pour la stabilité (stockage, formation du film et UV) et d'autres additifs pour l'obtention de propriétés spéciales. Le comportement et les propriétés des peintures dépendent de la nature de leurs constituants, notamment du liant, des charges et des pigments, ainsi que des additifs rhéologiques. Elles contiennent généralement un ou plusieurs épaississants dont la fonction est de maîtriser la rhéologie des formulations, tant au stade de leur fabrication, que pendant leur transport, leur stockage ou au cours de leur mise en oeuvre. Etant donnée la diversité des contraintes pratiques au niveau de chacune de ces étapes, il est intéressant pour le formulateur de disposer d'une gamme d'épaississants présentant des comportements rhéologiques différents en formulation.

Parmi tous les épaississants pour peinture, on distingue :
- les épaississants naturels à base de cellulose également appelés éthers cellulosiques, de type HEC ou de type HMHEC (Hydrophobically Modified HEC),
- les épaississants acryliques de type non associatif, appelés ASE (Alkali Swellable Emulsion) et ceux de type associatif, appelés HASE (Hydrophobically modified Alcali Swellable Emulsion) et
- les polyuréthanes épaississants associatifs de type HEUR (Hydrophobically modified Ethyoxylated URethane).

Les épaississants HASE peuvent, par exemple, être obtenus par polymérisation en présence d'un agent tensio-actif anionique, d'un monomère d'acide (méth)acrylique, d'un monomère de (méth)acrylate d'alkyle et d'un monomère hydrophobe constitué d'une chaîne aliphatique longue.
Les polyuréthanes épaississants ou HEUR, quant à eux, résultent de la polymérisation entre un composé de type poly(alkylène glycol), un polyisocyanate et un monomère associatif de type alkyle, aryle ou aryalkyle constitué d'un groupe terminal hydrophobe. Bien que les épaississants HASE et HEUR appartiennent à la catégorie des épaississants associatifs, le mécanisme d'épaississement ne peut pas être considéré comme complètement identique. En effet, le mécanisme d'épaississement de la formulation aqueuse en présence d'un HASE est dû à la présence des groupements hydrophobes qui sont susceptibles de s'assembler sous forme d'agrégats micellaires, mais également à la formation d'un gel qui résulte de liaisons ioniques entre les fonctions carboxyliques portées par le squelette du polymère et les molécules d'eau du solvant aqueux (JCT Research, Vol. 2 N°6, April 2005 - W. Wu and G.D. Shay - Tailoring HASE Rheology Through Polymer Design : Effects of Hydrophobe Size, Acid Content, And Molecular Weight). Contrairement aux épaississants HASE, les épaississants HEUR sont des composés non ioniques et leur mécanisme d'épaississement n'est pas dépendant d'interactions ioniques dans le milieu (Polymers as Rheology Modifiers - Chap.12: Systems approach to Rheology Control - pp.207-221 - ACS Symposium Series 462, 1991).
Ainsi, les comportements rhéologiques des épaississants HEUR et HASE peuvent varier considérablement alors que les monomères hydrophobes sont identiques.
On peut résumer les comportements des différents épaississants du marché de la manière suivante :

| Epaississant | Epaississement associatif | Epaississement non associatif | Poids moléculaire typique |
|---|---|---|---|
| HEUR | oui | négligeable | < 50 000 g/mol |
| ASE | non | oui | 100 000 - 1 000 000 g/mol |
| HASE | oui | oui | |
| HEC | non | oui | 3 000 - 100 000 g/mol |
| HMHEC | oui | oui | |

Coatex est à l'origine de nombreux travaux de recherche sur les épaississants pour peinture. Par ailleurs, Coatex commercialise les produits de la gamme Coapur®, par exemple les produits Coapur® XS, qui sont des polyuréthanes épaississants non ioniques procurant des profils rhéologiques qui varient entre le type newtonien (viscosité élevée à gradient de cisaillement élevé et faible à bas gradient de cisaillement et/ou le type pseudoplastique (viscosité élevée à bas gradient de cisaillement). De tels produits non ioniques présentent l'avantage de développer un pouvoir épaississant moins dépendant du pH de la formulation que les épaississants de type HASE.

Le document WO 02/102868 (Coatex), par exemple, concerne des polyuréthanes épaississants de type polymère à chaîne d'oxyde d'éthylène qui comportent en bouts de chaînes des groupements hydrophobes comportant plusieurs cycles aromatiques, notamment le distyrylphényle et le tristyrylphényle. De tels épaississants permettent d'obtenir une viscosité élevée à bas gradient de cisaillement et une bonne compatibilité pigmentaire quelque soit le type de peinture (mate ou satinée).

Le document WO 2006/048539 (Coatex) indique que l'utilisation de HASE présentant un groupement hydrophobe de type alkyle pouvant contenir jusqu'à 32 atomes de carbone ou de type aromatique pouvant contenir plus de 50 atomes de carbone permet d'obtenir un bon comportement dynamique (viscosité élevée à gradient de cisaillement élevé) et un bon comportement statique (viscosité élevée à gradient de cisaillement faible). Ce document ne concerne que les épaississants de type HASE.
Bien que ce document décrive les avantages d'un groupement hydrophobe contenant un nombre d'atomes de carbone élevé, il ne décrit pas de polyuréthane épaississant présentant un tel groupement.
Il est, en effet, connu comme étant techniquement difficile de formuler, en phase aqueuse, des polyuréthanes présentant en bouts de chaînes des groupements hydrophobes ayant un nombre d'atomes de carbone très élevé. En outre, sous réserve que la formulation en phase aqueuse soit possible, l'épaississement dans les formulations finales par interactions hydrophobes est également difficile à obtenir.

Dans cette perspective, les inventeurs ont mis au point un nouveau polyuréthane épaississant qui permet d'augmenter très notablement la viscosité à bas gradient de cisaillement et qui permet ainsi de conférer à la formulation un bon comportement statique, c'est-à-dire une viscosité élevée à gradient de cisaillement faible, tout en maintenant une très bonne compatibilité pigmentaire. Cet épaississant peut être classé dans la catégorie des épaississants de type pseudoplastique.
Ce nouvel épaississant peut, par exemple, être utilisé seul dans une formulation de peinture où il n'est pas nécessaire d'avoir une viscosité élevée à haut gradient de cisaillement (par exemple une peinture mate, un revêtement plastique épais ou d'étanchéité).
Il peut également être utilisé en combinaison avec un épaississant de type newtonien. Une telle combinaison permet ainsi d'obtenir une formulation présentant un bon comportement statique lié à la présence de l'épaississant de type pseudoplastique et un bon comportement dynamique lié à la présence de l'épaississant newtonien.
Un tel épaississant peut être formulé en phase aqueuse et, par sa structure particulière, il permet un épaississement de la formulation finale sans nécessiter d'équipement particulier ou d'énergie de cisaillement élevée.

### Epaississant HEUR

Un objet de la présente invention concerne un épaississant appartenant à la catégorie des HEUR (Hydrophobically modified Ethyoxylated URethane). Il s'agit d'un polymère épaississant associatif hydrosoluble pour compositions aqueuses.

Plus précisément, il s'agit d'un polyuréthane hydrosoluble résultant de la condensation :
a) d'au moins un composé de formule (I) : 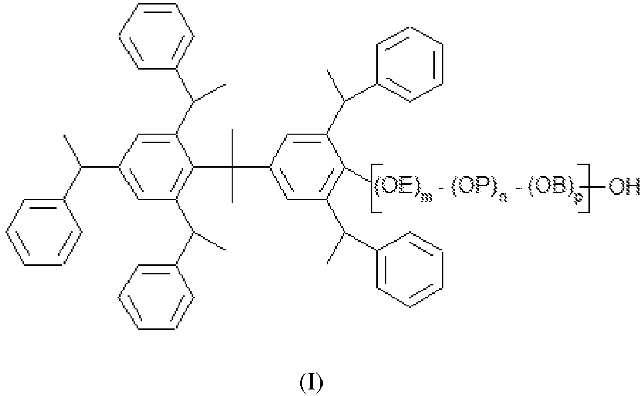 dans lequel :
   [(OE)ₘ - (OP)ₙ - (OB)ₚ] représente une chaîne polyalkoxylée constituée d'unités alkoxylées, réparties en blocs, alternées ou statistiques, choisies parmi les unités éthoxylées EO, les unités propoxylées OP et les unités butoxylées OB et
   m, n et p représentent, indépendamment les uns des autres, 0 ou un nombre entier variant entre 1 et 250 (bornes incluses), la somme de m, n et p étant comprise entre 2 et 250,
b) d'au moins un polyol, par exemple d'au moins un poly(alkylène glycol) et
c) d'au moins un polyisocyanate.

Le composé de formule (I) est appelé dans le cadre de la présente invention pentastyrylcumylphénol polyalkoxylé. Par « pentastyrylcumylphénol » », on entend un cycle aromatique cumylphénol sur lequel sont greffés cinq motifs styrènes.
Les composés de formule (I) comportent une chaîne polyalkoxylée, comportant au moins 2 unités alkoxylées.

Le composé de formule (I) selon l'invention est, par exemple, obtenu par une réaction d'alkylation du cumylphénol en présence de styrène, puis d'alkoxylation.
Les conditions opératoires d'une telle réaction d'alkylation d'un cumylphénol en présence de styrène sont connues de l'homme du métier qui peut, par exemple, se référer au document US 2,432,356 décrivant l'alkylation d'un phénol en présence de styrène.
Le composé de formule (I) peut se trouver en mélange avec d'autres composés cycliques, par exemple des espèces de type cumylphénol sur lesquelles sont greffés 2, 3, 4 et/ou 6 styrènes.

Ce sont ces nouveaux polyuréthanes qui permettent, par exemple, d'épaissir une formulation de peinture à bas gradient de cisaillement, tout en limitant cette augmentation à plus haut gradient, un tel comparatif étant réalisé avec des structures aromatiques de l'art antérieur, par exemple telles que décrites dans la demande de brevet WO 02/102868.

Par ailleurs, le polyuréthane comporte en tant que constituant b) un polyol qui peut être un poly(alkylène glycol).

Par « poly(alkylène glycol) », on entend un polymère d'un alkylène glycol dérivé d'un oxyde oléfinique. Les chaînes poly(alkylènes glycols) du constituant b) selon la présente invention renferment une proportion de groupes éthylènes-oxys, une proportion de groupes propylènes-oxys et/ou une proportion de groupes butylènes-oxys. Les chaînes poly(alkylènes glycols) selon la présente invention peuvent, par exemple, comprendre une proportion dominante de groupes éthylènes-oxys en association avec une proportion secondaire de groupes propylènes-oxys. Des exemples spécifiques de polymères alkylènes glycols comprennent : les poly(alkylènes glycols) ayant un poids moléculaire moyen de 1 000, 4 000, 6 000 et 10 000 g/mol ; les polyéthylènes polypropylènes glycols ayant un pourcentage d'oxydes d'éthylènes compris entre 20 % et 80 % en poids et un pourcentage d'oxydes de propylènes compris entre 20 % et 80 % en poids.
Selon un mode de réalisation de la présente invention, dans la formule (I) ci-dessus :
- m représente un nombre entier variant entre 1 et 250 (différent de 0) et
- n et p représentent, indépendamment l'un de l'autre, 0 ou un nombre entier variant entre 1 et 250 (bornes incluses),
la somme de m, n et p étant comprise entre 2 et 250, par exemple entre 2 et 150, ou par exemple entre 3 et 100.

Selon un autre mode de réalisation de la présente invention, dans la formule (I) ci-dessus :
- m et n représentent un nombre entier variant entre 1 et 250 (différent de 0) et
- p est égal à 0,
la somme de m et n étant comprise entre 2 et 250, par exemple entre 2 et 150, ou par exemple entre 3 et 100.

Selon un autre mode de réalisation encore, dans la formule (I) ci-dessus :
- m représente un nombre entier variant entre 2 et 250, par exemple entre 2 et 150, ou par exemple entre 3 et 100 et
- n et p égalent 0.
Selon ce mode de réalisation, ladite chaîne polyalkoxylée du composé de formule (I) est exclusivement constituée d'unités éthoxylées EO.

Selon un aspect de la présente invention, les polyuréthanes résultent de la condensation notamment d'un poly(alkylène glycol) qui est le poly(éthylène glycol). Il peut s'agir, par exemple, d'un poly(éthylène glycol) dont la masse moléculaire varie entre 2 000 g/mol et 20 000 g/mol, par exemple entre 8 000 g/mol et 15 000 g/mol (bornes incluses). A titre d'exemple, on peut citer le poly(éthylène glycol) (ou PEG) de masse moléculaire variant entre 10 000 g/mol et 12 000 g/mol (bornes incluses).

Par « polyisocyanate », on entend un composé qui comprend au moins 2 groupes fonctionnels isocyanates -N=C=O.
Selon un aspect de la présente invention, les polyuréthanes résultent de la condensation notamment d'un polyisocyanate qui est choisi dans le groupe consistant en le toluène diisocyanate, les dimères du toluène diisocyanate, les trimères du toluène diisocyanate, le 1,4-butane diisocyanate, le 1,6-hexane diisocyanate, l'isophorone diisocyanate, le 1,3- cyclohexane diisocyanate, le 1,4- cyclohexane diisocyanate, le 4,4'diisocyanatodicyclohexylmethane, le 1-méthyl-2,4-diisocyanatocyclohexane, le diphényle méthylène diisocyanate (MDI), par exemple le 2,2'-MDI, le 2,4'-MDI, le 4n4'-MDI ou leurs mélanges, le dibenzyl diisocyanate, un mélange du 1-méthyl-2,4-diisocyanatocyclohexane et du 1-méthyl-2,6-diisocyanatocyclohexane, le biuret d'hexaméthylène diisocyanate, les dimères du biuret d'hexaméthylène diisocyanate, les trimères du biuret d'hexaméthylène diisocyanate et un mélange d'au moins deux de ces composés.

Selon un aspect de l'invention, ledit polyuréthane résulte de la condensation de :
a) 1 % à 29 % en poids d'au moins un composé de formule (I),
b) 70 % à 98 % en poids d'au moins un poly(alkylène glycol) et
c) 1 % à 29 % en poids d'au moins un polyisocyanate,
la somme de ces pourcentages massiques étant égale à 100 %.

Selon un autre aspect de l'invention, ledit polyuréthane résulte de la condensation de :
a) 3 % à 10 % en poids d'au moins un composé de formule (I),
b) 80 % à 94 % en poids d'au moins un poly(alkylène glycol) et
c) 3 % à 10 % en poids d'au moins un polyisocyanate,
la somme de ces pourcentages massiques étant égale à 100 %.

La fabrication des polyuréthanes, qui appartiennent à la famille des épaississants de type HEUR, est connue de l'homme du métier qui pourra se reporter à l'enseignement des documents cités auparavant dans l'arrière plan technologique de la présente invention. Un objet de la présente invention concerne également un procédé de préparation d'un polyuréthane tel que décrit ci-dessus, ledit procédé consistant en une condensation de ses différents constituants.

### Composition aqueuse

La présente invention se rapporte également à une composition aqueuse comprenant un polyuréthane selon l'invention, tel que décrit ci-dessus.
Selon un mode de réalisation, ce polyuréthane est coformulé en présence d'un agent de coalescence, tel que décrit ci-après, et un solvant.
Selon un autre mode de réalisation, ladite composition aqueuse comprend un polyuréthane selon l'invention, tel que décrit ci-dessus, ainsi que de l'eau et un agent tensioactif.
Ainsi, selon cet aspect de l'invention, le polyuréthane est formulé dans l'eau en présence d'au moins un agent tensioactif. Cet agent tensioactif permet de formuler l'épaississant sous forme d'une solution aqueuse liquide qui peut ainsi être plus facilement mise en oeuvre par le formulateur.
Par « tensioactif » ou « agent tensioactif », on entend une molécule ou un polymère constitué d'au moins une partie hydrophile et d'au moins une partie hydrophobe. L'agent tensioactif utilisé dans le cadre de la présente invention peut être de nature différente, par exemple il peut être anionique ou non ionique.

Ce tensioactif peut être sélectionné parmi les classes de tensioactifs ioniques (dans ce cas de préférence anioniques) et/ou non ioniques et/ou mixtes (comportant dans la même molécule une structure non ionique et anionique). Le tensioactif préféré est composé d'au moins un tensioactif sélectionné dans la classe de tensioactif non ionique, éventuellement en présence d'un tensioactif anionique.
Parmi les tensioactifs anioniques convenables, on peut citer les sels de sodium, lithium, potassium, ammonium ou de magnésium dérivés des alkyls éthers sulfates avec alkyl variant de C6 à C12, en configuration linéaire, iso, oxo, cyclique ou aromatique, ou des alkyls sulfates en C12, des esters alkyls phosphates ou les dialkyls sulfosuccinates. Les tensioactifs anioniques sont de préférence utilisés avec au moins un tensioactif non ionique.
Comme exemples de tensioactifs mixtes, on peut citer les sulfonates d'alkyl phénol alkoxylés. Les tensioactifs non ioniques peuvent être utilisés seuls ou en combinaison avec un tensioactif anionique. Comme exemples préférés de tensioactifs non ioniques convenables, on peut citer : les alcools gras en C12-C18 éthoxylés (2 à 35 EO), alcool gras iso éthoxylés (2 à 40 EO), alcools gras monobranchés éthoxylés en C10-C18 (2 à 40 EO), esters de sorbitol en C18, esters de sorbitol éthoxylés (5 à 20 motifs EO), ou acides gras en C12-C18 éthoxylés (7 EO), huile de ricin éthoxylée (30 à 40 EO), huile de ricin hydrogénée éthoxylée (7 à 60 EO), esters gras comme : palmitate de glycérol, stéarate de glycérol, stéarate d'éthylène glycol, stéarate de diéthylène glycol, stéarate de propylène glycol, stéarate de polyéthylène glycol 200 ou esters gras éthoxylés (2 à 15 EO) en C18. Les chaînes hydrophobes peuvent correspondre à des structures linéaires, iso, oxo, cycliques ou aromatiques.

Selon un mode de réalisation, la composition comprend au moins un tensioactif non ionique éventuellement combiné avec au moins un tensioactif anionique, à une teneur totale en poids allant de 5 % à 30 % en poids, par exemple de 8 % à 20 % en poids ou de 10 % à 17 % en poids. Dans ce cas, le rapport en poids entre les deux agents tensioactifs peut, par exemple, varier entre 25/75 et 75/25.

Selon un autre mode de réalisation de la présente invention, ladite composition comprend plus de deux agents tensioactifs, par exemple trois ou quatre.

Selon un aspect de l'invention, la composition aqueuse comprend, en outre, au moins un additif sélectionné dans le groupe consistant en un biocide, un solvant, un agent anti-mousse, un régulateur de pH, un agent de coalescence et leurs mélanges.

Par « biocide », on entend une substance chimique destinée à détruire, repousser ou rendre inoffensifs les organismes nuisibles, à en prévenir l'action ou à les combattre de toutes autres manières, par une action chimique ou biologique.
Par « agent anti-mousse », on entend une substance ou une formulation destinée à détruire les bulles d'air au sein d'un milieu liquide homogène ou hétérogène (ou à sa surface) ou à prévenir leur formation.

Par « régulateur de pH » ou « agent régulateur de pH », on entend un composé chimique qui permet d'ajuster le pH à la valeur attendue. Par exemple, l'agent régulateur de pH peut augmenter le pH, c'est le cas des bases telles que NaOH. Alternativement, l'agent régulateur de pH peut diminuer le pH, c'est le cas des acides.
Par « agent de coalescence », on entend un agent utilisé dans les peintures qui permet d'abaisser la température minimum de formation du film (TMFF ou MFFT pour Minimum Film Formation Temperature) de peinture à une température adaptée aux conditions d'application souhaitées (par exemple, une TMFF de 5°C pour une application à l'extérieur). A titre d'exemple d'agents coalescents selon l'invention, on peut citer le propylène glycol, le butyl glycol, le 2,2,4-triméthyl-1,3-pentanediol monoisobutyrate ou le 2,2,4-triméthyl-1,3-pentanediol diisobutyrate, le 2,2,4-triméthyl-1,3-pentanediol monoisobutyrate, les dérivés d'éthers de glycol de type Dowanol®.

Selon un mode de réalisation, ladite composition aqueuse selon l'invention consiste en :
1) 5 % à 50 % en poids d'au moins un polyuréthane selon l'invention, tel que décrit ci-dessus,
2) 5 % à 30 % en poids d'au moins un agent tensioactif,
3) 20 % à 75 % en poids d'eau et
4) 0 à 5 % en poids d'au moins un autre additif choisi dans le groupe consistant en un biocide, un solvant, un agent anti-mousse, un régulateur de pH, un agent de coalescence et leurs mélanges,
la somme de ces pourcentages massiques étant égale à 100 %.

### Formulation aqueuse

Un objet de la présente invention consiste en une formulation aqueuse comprenant un polyuréthane selon l'invention ou une composition aqueuse selon l'invention, ladite formulation étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

La présente invention concerne également l'utilisation d'un polyuréthane selon l'invention ou d'une composition aqueuse selon l'invention pour épaissir une formulation aqueuse, ladite formulation étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

Selon un aspect de la présente invention, la formulation aqueuse comprend de 0,02 % à 5 % en poids de matière active dudit épaississant.
Selon un autre aspect de la présente invention, la formulation aqueuse comprend de 0,05 % à 2 % en poids de matière active dudit épaississant.
Par « poids de matière active », on entend le poids sec de polyuréthane selon l'invention, indépendamment des ingrédients de coformulation.
Selon un autre aspect encore de la présente invention, la formulation aqueuse comprend au moins une charge minérale sélectionnée dans le groupe consistant en le carbonate de calcium, le kaolin, le talc et le silicate, et/ou au moins un pigment sélectionné dans le groupe consistant en le dioxyde de titane, l'oxyde de fer et le zinc.
Selon un aspect de l'invention, la formulation aqueuse est une peinture et comprend au moins un agent dispersant, au moins une charge ou un pigment minéral, au moins un liant, au moins un biocide, au moins un agent anti-mousse et éventuellement un agent tensioactif, un agent de surface et/ou un agent de coalescence.

Les exemples qui suivent permettent de mieux appréhender la présente invention, sans en limiter la portée.

### EXEMPLES

On détermine la viscosité des formulations de test ou des formulations de peinture à différents gradients de vitesse :
- à faible gradient de vitesse, la viscosité Brookfield qui est mesurée à l'aide d'un viscosimètre Brookfield de type RVT, dans le flacon non agité, à une température de 25°C et à deux vitesses de rotation de 10 et 100 tours par minute avec le mobile adéquat. La lecture est effectuée après 1 minute de rotation. On obtient ainsi 2 mesures de viscosité Brookfield respectivement notées µ_{Bk10} et µ_{Bk100} (mPa.s),
- à moyen gradient de vitesse : la viscosité Stormer, notée µ_{S} (Krebs Units) et
- à haut gradient de vitesse : la viscosité Cone Plan ou viscosité ICI, notée µ_{I} (mPa.s).

### Exemple 1

Cet exemple illustre le pouvoir épaississant des polyuréthanes dans des formulations simples contenant un liant, de l'eau et lesdits polyuréthanes, permettant d'obtenir un bon niveau de discrimination entre les différents essais.

Il illustre le pouvoir épaississant d'un polyuréthane selon l'invention (essais 1-2 et 1-4), mettant en oeuvre un composé de formule (I) comportant 3 unités d'oxyde d'éthylène.

Parallèlement, cet exemple illustre aussi un polyuréthane (essais 1-1 et 1-3) selon la demande de brevet WO 02/102868, mettant en oeuvre un composé tristyrylphénol comportant 3 unités d'oxyde d'éthylène.

Les deux polyuréthanes décrits résultent de la condensation de, exprimé en pourcentage en poids par rapport au poids total du polyuréthane :
- 86 % en poids de poly(éthylène glycol) de masse moléculaire en poids égale à 10 000 g/mol,
- 9 % en poids dudit composé hydrophobe et
- 5 % en poids d'isophorone diisocyanate.

Tous ces polyuréthanes sont formulés dans l'eau en présence d'un tensioactif qui est une coupe C8-C10 d'un alcool gras alkoxylé (Simulsol® OX1008). Les ratios massiques PU/tensioactif/eau sont indiqués dans le tableau 1 ci-dessous.

### Test du pouvoir épaississant

Dans chacun des essais 1-1 à 1-4, on introduit dans un bécher 140 g de Mowilith™ LDM 1871, 120 g d'eau bipermutée et 32,8 g de la composition à tester.
A 25°C, on mesure alors les viscosités Brookfield™ à 10 et 100 tours par minute (µ_{Bk10} et µ_{Bk100}, en mPa.s), la viscosité Stormer™ (µ_{S}, en Krebs Units KU) mesurée avec le module standard et la viscosité ICI (µ_{I}, en mPa.s) de la formulation.

Les résultats apparaissent dans le tableau 1.

**Tableau 1**

| Essai n° | 1-1 | 1-2 | 1-3 | 1-4 |
|---|---|---|---|---|
| Epaississant sous forme de composition aqueuse : Ratio PU/tensioactif/eau | 17,5/11,5/71 | 17,5/11,5/71 | 17,5/15/67,5 | 17,5/15/67, 5 |
| Formulation de test : | | | | |
| - eau | Eau : 120 g | | | |
| - liant : Mowilith™ LDM 1871 | Liant : 140 g | | | |
| - épaississant | Epaississant : 32,8 g | | | |
| | | | | |

| Art ANTérieur INVention | AANT | INV | AANT | INV |
|---|---|---|---|---|
| µ_{Bk10} | 1 600 | 2720 | 780 | 2420 |
| µ_{Bk100} | 1 550 | 2 152 | 780 | 1 970 |
| µ_{S} | 92 | 103 | 73 | 99 |
| µ_{I} | 200 | 170 | 160 | 160 |

Les essais selon l'invention développent un épaississement nettement amélioré à bas gradient de vitesse, ce qui se traduit par une augmentation importante des viscosités Brookfield mesurées à 10 tours par minute et encore plus conséquente à 100 tours par minute comparativement aux essais selon l'art antérieur.

### Exemple 2

Cet exemple illustre le pouvoir épaississant des polyuréthanes dans des formulations simples contenant un liant, de l'eau et lesdits polyuréthanes.

Il illustre le pouvoir épaississant de :
- essai 2-2 : polyuréthane selon l'invention, mettant en oeuvre un composé de formule (I) comportant 3 unités d'oxyde d'éthylène,
- essai 2-4 : polyuréthane selon l'invention, mettant en oeuvre un composé de formule (I) comportant 15 unités d'oxyde d'éthylène et
- essai 2-6 : polyuréthane selon l'invention, mettant en oeuvre un composé de formule (I) comportant 25 unités d'oxyde d'éthylène.

Parallèlement, cet exemple illustre aussi le pouvoir épaississant de :
- essai 2-1 : un polyuréthane selon la demande de brevet WO 02/102868, mettant en oeuvre un composé tristyrylphénol comportant 3 unités d'oxyde d'éthylène,
- essai 2-3 : un polyuréthane selon la demande de brevet WO 02/102868, mettant en oeuvre un composé tristyrylphénol comportant 15 unités d'oxyde d'éthylène et
- essai 2-5 : un polyuréthane selon la demande de brevet WO 02/102868, mettant en oeuvre un composé tristyrylphénol comportant 25 unités d'oxyde d'éthylène.

Les polyuréthanes décrits résultent de la condensation de, exprimé en pourcentage en poids par rapport au poids total du polyuréthane :
- 86 % en poids de poly(éthylène glycol) de masse moléculaire en poids égale à 10 000 g/mol,
- 9 % en poids dudit composé hydrophobe et
- 5 % en poids d'isophorone diisocyanate.

Tous ces polyuréthanes sont formulés dans l'eau en présence d'un tensioactif qui est une coupe C8-C10 d'un alcool gras alkoxylé (Simulsol® OX1008). Les ratios pU/tensioactif/eau sont indiqués dans le tableau 2 ci-dessous.

### Test du pouvoir épaississant

Dans chacun des essais 2-1 à 2-6, on introduit dans un bécher 150,0 g de Axilat™ DS 910, 140,0 g d'eau bipermutée, 0,4 g d'ammoniaque à 30 % et 10,0 g de la composition à tester.

A 25°C, on mesure alors les viscosités Brookfield™ à 10 et 100 tours par minute (µ_{Bk10} et µ_{Bk100}, en mPa.s), la viscosité Stormer™ (µ_{S}, en Krebs Units KU) (mesurée avec le module dit « paste spindle ») et la viscosité ICI (µ_{I}, en mPa.s) de la formulation.

Les résultats apparaissent dans le tableau 2.

**Tableau 2**

| Essai n° | 2-1 | 2-2 | 2-3 | 2-4 | 2-5 | 2-6 |
|---|---|---|---|---|---|---|
| Epaississant sous forme de composition aqueuse : Ratio PU/tensioactif/eau | 17,5/15/ 67,5 | 17,5/15/ 67,5 | 17,5/15/ 72,5 | 17,5/15/ 67,5 | 17,5/15/ 67,5 | 17,5/15/ 67,5 |
| Formulation de test : | | | | | | |
| - eau | Eau : 140 g | | | | | |
| - liant : Axilat ™ DS 910 | Liant : 150 g | | | | | |
| - épaississant | Epaississant : 10 g | | | | | |
| | | | | | | |

| Art Antérieur INvention | AANT | INV | AANT | INV | AANT | INV |
|---|---|---|---|---|---|---|
| µ_{Bk10} | 14 100 | 47 800 | 2 100 | 5 000 | 300 | 800 |
| µ_{Bk100} | 6 550 | 8 110 | 1 810 | 2 520 | 260 | 680 |
| µ_{S} | 114 | 120 | 96 | 94 | 61 | 74 |
| µ_{I} | 400 | 300 | 500 | 200 | 200 | 100 |

Les essais selon l'invention développent un épaississement nettement amélioré à bas gradient de vitesse, ce qui se traduit par une augmentation importante des viscosités Brookfield mesurées à 10 tours par minute et encore plus conséquente à 100 tours par minute comparativement aux essais selon l'art antérieur.

### Exemple 3

Cet exemple illustre l'utilisation d'un épaississant selon l'invention dans une formulation de peinture mate, aqueuse, haute CPV, sans solvant (comprenant un liant de type éthylène vinyl acétate (EVA)), dont la constitution est donnée dans le tableau 3 ci-dessous.

Il illustre le pouvoir épaississant d'un polyuréthane selon l'invention (essai 3-2), mettant en oeuvre un composé de formule (I) comportant 3 unités d'oxyde d'éthylène.

Parallèlement, cet exemple illustre aussi un polyuréthane (essai 3-1) selon la demande de brevet WO 02/102868, mettant en oeuvre un composé tristyrylphénol comportant 3 unités d'oxyde d'éthylène.

Les deux polyuréthanes décrits résultent de la condensation de, exprimé en pourcentage en poids par rapport au poids total du polyuréthane :
- 86 % en poids de poly(éthylène glycol) de masse moléculaire en poids égale à 10 000 g/mol,
- 9 % en poids dudit composé hydrophobe et
- 5 % en poids d'isophorone diisocyanate.

Les deux polyuréthanes sont formulés dans l'eau en présence d'un tensioactif qui est une coupe C8-C10 d'un alcool gras alkoxylé (Simulsol® OX1008). Les ratios PU/tensioactif/eau sont 17,5/11,5/71.

Tous les résultats ont été regroupés dans le tableau 3.

Pour chacun des essais, on a déterminé les viscosités µ_{BK10}, µ_{BK100}, µ_{I} (en mPa.s) et µ_{S} (en Krebs Units KU mesurées avec le module standard), selon les méthodes décrites ci-dessus à T = 0 et à T = 24 h à température ambiante.

**Tableau 3**

| | | Essai 3-1 AANT | Essai 3-2 INV |
|---|---|---|---|
| Constituant de la peinture Masse (g) | | | |
| Eau | | 323 | 323 |
| Dispersant (Ecodis® P50) | | 4 | 4 |
| Biocide (Acticide® MBS) | | 2 | 2 |
| Agent anti-mousse (Byk® 34) | | 1 | 1 |
| TiO₂ (TiONA 568) | | 40 | 40 |
| CaCO₃ (Omyacoat® 8500G) | | 210 | 210 |
| CaCO₃ (Durcal® 5) | | 330 | 330 |
| Liant (Mowilith® LDM 1871) | | 80 | 80 |
| Ammoniaque 30 % (qsp pH=9) | | 0,1 | 0,1 |
| Epaississant | | 40 | 40 |

| **Résultats** | | | |
|---|---|---|---|
| T = 0 | µ_{Bk10} | 7 900 | 10 100 |
| | µ_{Bk100} | 2 050 | 3 100 |
| | µ_{S} | 97 | 106 |
| | µ_{I} | 1,7 | 1,3 |
| T ₌ 24 h | µ_{Bk10} | 8 800 | 10 300 |
| | µ_{Bk100} | 2 390 | 3 130 |
| | µ_{S} | 100 | 107 |
| | µ_{I} | 170 | 130 |

Les essais selon l'invention développent un épaississement amélioré à bas gradient de vitesse dans une formulation de peinture, ce qui se traduit par une augmentation des viscosités Brookfield mesurées à 10 tours par minute et à 100 tours par minute comparativement aux essais selon l'art antérieur.

## Revendications

1. Polyuréthane hydrosoluble résultant de la condensation :
a) d'au moins un composé de formule (I) : 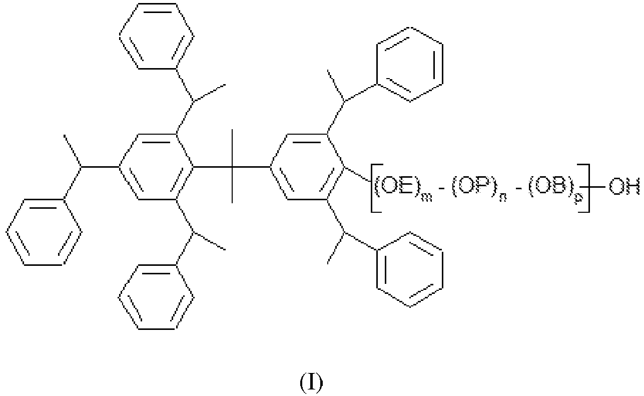 dans lequel
[(OE)ₘ - (OP)ₙ - (OB)ₚ] représente une chaîne polyalkoxylée constituée d'unités alkoxylées, réparties en blocs, alternées ou statistiques, choisies parmi les unités éthoxylées EO, les unités propoxylées OP et les unités butoxylées OB et
m, n et p représentent, indépendamment les uns des autres, 0 ou un nombre entier variant entre 1 et 250 (bornes incluses), la somme de m, n et p étant comprise entre 2 et 250,
b) d'au moins un polyol, par exemple d'au moins un poly(alkylène glycol) et
c) d'au moins un polyisocyanate.

2. Polyuréthane selon la revendication 1, résultant de la condensation de :
a) 1 % à 29 % en poids d'au moins un composé de formule (I),
b) 70 % à 98 % en poids d'au moins un poly(alkylène glycol) et
c) 1 % à 29 % en poids d'au moins un polyisocyanate,
la somme de ces pourcentages massiques étant égale à 100 %.

3. Polyuréthane selon la revendication 1 ou 2, résultant de la condensation de :
a) 3 % à 10 % en poids d'au moins un composé de formule (I),
b) 80 % à 94 % en poids d'au moins un poly(alkylène glycol) et
c) 3 % à 10 % en poids d'au moins un polyisocyanate,
la somme de ces pourcentages massiques étant égale à 100 %.

4. Polyuréthane selon l'une quelconque des revendications précédentes, selon lequel le poly(alkylène glycol) est un poly(éthylène glycol) dont la masse moléculaire varie entre 2 000 g/mol et 20 000 g/mol.

5. Composition aqueuse comprenant un polyuréthane selon l'une quelconque des revendications 1 à 4.

6. Composition aqueuse selon la revendication 5, comprenant en outre de l'eau et un agent tensioactif.

7. Composition aqueuse selon la revendication 5 ou 6, comprenant en outre au moins un additif sélectionné dans le groupe consistant en un biocide, un solvant, un agent anti-mousse, un régulateur de pH, un agent de coalescence et leurs mélanges.

8. Composition aqueuse selon l'une quelconque des revendications 5 à 7, consistant en :
1) 5 % à 50 % en poids d'au moins un polyuréthane selon l'une quelconque des revendications 1 à 4,
2) 5 % à 30 % en poids d'au moins un tensioactif,
3) 20 % à 75 % en poids d'eau et
4) 0 à 5 % en poids d'au moins un autre additif choisi dans le groupe consistant en un biocide, un solvant, un agent anti-mousse, un régulateur de pH, un agent de coalescence et leurs mélanges,
la somme de ces pourcentages massiques étant égale à 100 %.

9. Formulation aqueuse comprenant un polyuréthane selon l'une quelconque des revendications 1 à 4 ou une composition aqueuse selon l'une quelconque des revendications 5 à 8, ladite formulation étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

10. Utilisation d'un polyuréthane selon l'une quelconque des revendications 1 à 4 ou d'une composition aqueuse selon l'une quelconque des revendications 5 à 8 pour épaissir une formulation aqueuse, ladite formulation étant sélectionnée dans le groupe consistant en une peinture, un enduit, un crépis, un revêtement épais, un revêtement d'imperméabilisation, une laque, un vernis, une encre, une suspension minérale (slurry), une sauce de couchage papetière, une formulation cosmétique et une formulation détergente.

## Patentansprüche

1. Wasserlösliches Polyurethan, welches erhalten wird aus der Kondensation:
a) von mindestens einer Verbindung der Formel (I): 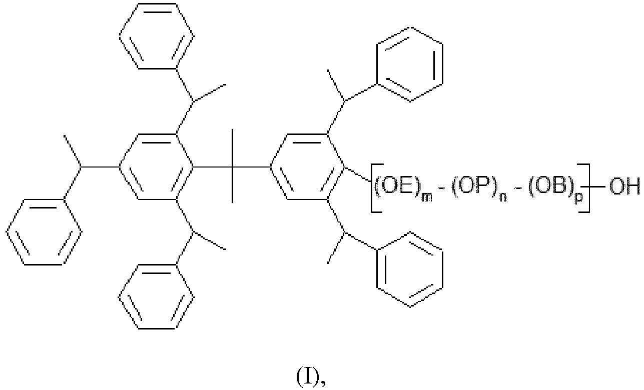 wobei
[(OE)ₘ - (OP)ₙ - (OB)ₚ] für eine polyalkoxylierte Kette steht, bestehend aus alkoxylierten Einheiten, in Blöcke verteilt, abwechselnd oder statistisch, ausgewählt aus ethoxylierten Einheiten EO, propoxylierten Einheiten OP und butoxylierten Einheiten OB, und
m, n und p unabhängig voneinander für 0 oder eine ganze Zahl variierend zwischen 1 und 250 (einschließlich) stehen, wobei die Summe von m, n und p zwischen 2 und 250 liegt,
b) von mindestens einem Polyol, beispielsweise mindestens einem Poly(alkylenglykol), und
c) von mindestens einem Polyisocyanat.

2. Polyurethan nach Anspruch 1, welches erhalten wird aus der Kondensation von:
a) 1 Gew.-% bis 29 Gew.-% mindestens einer Verbindung der Formel (I),
b) 70 Gew.-% bis 98 Gew.-% mindestens eines Poly(alkylenglykols), und
c) 1 Gew.-% bis 29 Gew.-% mindestens eines Polyisocyanats,
wobei die Summe dieser Massenprozentsätze gleich 100 % ist.

3. Polyurethan nach Anspruch 1 oder 2, welches erhalten wird aus der Kondensation von:
a) 3 Gew.-% bis 10 Gew.-% mindestens einer Verbindung der Formel (I),
b) 80 Gew.-% bis 94 Gew.-% mindestens eines Poly(alkylenglykols), und
c) 3 Gew.-% bis 10 Gew.-% mindestens eines Polyisocyanats,
wobei die Summe dieser Massenprozentsätze gleich 100 % ist.

4. Polyurethan nach einem der vorhergehenden Ansprüche, wobei das Poly(alkylenglykol) ein Poly(ethylenglykol) ist, dessen Molmasse zwischen 2 000 g/mol und 20 000 g/mol variiert.

5. Wässrige Zusammensetzung, umfassend ein Polyurethan nach einem der Ansprüche 1 bis 4.

6. Wässrige Zusammensetzung nach Anspruch 5, ferner umfassend Wasser und ein Tensid.

7. Wässrige Zusammensetzung nach Anspruch 5 oder 6, ferner umfassend mindestens ein Additiv, ausgewählt aus der Gruppe bestehend aus einem Biozid, einem Lösungsmittel, einem Antischaummittel, einem pH-Regulator, einem Koaleszenzmittel und ihren Mischungen.

8. Wässrige Zusammensetzung nach einem der Ansprüche 5 bis 7, bestehend aus:
1) 5 Gew.-% bis 50 Gew.-% mindestens eines Polyurethans nach einem der Ansprüche 1 bis 4,
2) 5 Gew.-% bis 30 Gew.-% mindestens eines Tensids,
3) 20 Gew.-% bis 75 Gew.-% Wasser, und
4) 0 bis 5 Gew.-% mindestens eines weiteren Additivs, ausgewählt aus der Gruppe bestehend aus einem Biozid, einem Lösungsmittel, einem Antischaummittel, einem pH-Regulator, einem Koaleszenzmittel und ihren Mischungen,
wobei die Summe dieser Massenprozentsätze gleich 100 % ist.

9. Wässrige Formulierung, umfassend ein Polyurethan nach einem der Ansprüche 1 bis 4 oder eine wässrige Zusammensetzung nach einem der Ansprüche 5 bis 8, wobei die Formulierung ausgewählt ist aus der Gruppe bestehend aus einer Farbe, einem Überzug, einem Putz, einer dicken Beschichtung, einer Versiegelungsbeschichtung, einem Lack, einem Anstrich, einer Tinte, einer mineralischen Suspension (Aufschlämmung), einer Papierstreichmasse, einer kosmetischen Formulierung und einer Detergensformulierung.

10. Verwendung eines Polyurethans nach einem der Ansprüche 1 bis 4 oder einer wässrigen Zusammensetzung nach einem der Ansprüche 5 bis 8, zur Verdickung einer wässrigen Formulierung, wobei die Formulierung ausgewählt ist aus der Gruppe bestehend aus einer Farbe, einem Überzug, einem Putz, einer dicken Beschichtung, einer Versiegelungsbeschichtung, einem Lack, einem Anstrich, einer Tinte, einer mineralischen Suspension (Aufschlämmung), einer Papierstreichmasse, einer kosmetischen Formulierung und einer Detergensformulierung.

## Claims

1. A water-soluble polyurethane resulting from the condensation of:
a) at least one compound of formula (I): 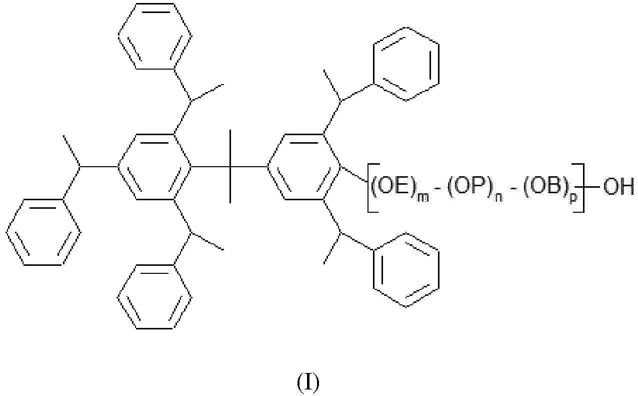 wherein:
[(EO)ₘ - (PO)ₙ - (BO)ₚ] represents a polyalkoxylated chain constituted of alkoxylated units, in block, alternated or random structures, chosen from among ethoxylated units EO, propoxylated units PO, and butoxylated units BO,
m, n and p represent, independent of one another, 0 or a whole number varying between 1 and 250 inclusive, the sum of m, n and p being between 2 and 250,
b) at least one polyol, for example at least one poly(alkylene glycol) and
c) at least one polyisocyanate.

2. The polyurethane according to claim 1, resulting from the condensation of:
a) 1% to 29% by weight of at least one compound of formula (I),
b) 70% to 98% by weight of at least one poly(alkylene glycol) and
c) 1% to 29% by weight of at least one polyisocyanate,
the sum of these mass percentages being equal to 100%.

3. The polyurethane according to claim 1 or 2, resulting from the condensation of:
a) 3% to 10% by weight of at least one compound of formula (I),
b) 80% to 94% by weight of at least one poly(alkylene glycol) and
c) 3% to 10% by weight of at least one polyisocyanate,
the sum of these mass percentages being equal to 100%.

4. The polyurethane according to any one of the preceding claims, wherein the poly(alkylene glycol) is a poly(ethylene glycol) whose molecular mass varies between 2,000 g/mol and 20,000 g/mol.

5. An aqueous composition comprising a polyurethane according to any one of the claims 1 to 4.

6. The aqueous composition according to claim 5, further comprising water and a surfactant.

7. The aqueous composition according to claim 5 or 6, further comprising at least one additive selected from the group consisting of a biocide, a solvent, an anti-foaming agent, a pH regulator, a coalescing agent and mixtures thereof.

8. The aqueous composition according to any one of the claims 5 to 7, consisting of:
1) 5% to 50% by weight of at least one polyurethane according to any one of the claims 1 to 4,
2) 5% to 30% by weight of at least one surfactant,
3) 20% to 75% by weight of water and
4) 0 to 5% by weight of at least one other additive chosen from a group consisting of a biocide, a solvent, an anti-foaming agent, a pH regulator, a coalescing agent and mixtures thereof,
the sum of these mass percentages being equal to 100%.

9. An aqueous formulation comprising a polyurethane according to any one of the claims 1 to 4 or an aqueous composition according to any one of the claims 5 to 8, said formulation being selected from the group consisting of a paint, a putty, a render coating, a thick coating, a waterproof coating, a lacquer, a varnish, an ink, a mineral slurry, a paper coating color, a cosmetic formulation and a detergent formulation.

10. Use of a polyurethane according to any one of the claims 1 to 4 or an aqueous composition according to any one of the claims 5 to 8, to thicken an aqueous formulation, said formulation being selected from the group consisting of a paint, a putty, a render coating, a thick coating, a waterproof coating, a lacquer, a varnish, an ink, a mineral slurry, a paper coating color, a cosmetic formulation and a detergent formulation.
